# EUROPÄISCHE PATENTANMELDUNG

(11) **EP 3 985 771 A1**
(43) Veröffentlichungstag der Anmeldung: **20.04.2022**
(21) Anmeldenummer: 21200296.8
(22) Anmeldetag: 30.09.2021
(51) Int. Cl.: H01M 10/052, H01M 10/0585, H01M 10/0587, H01M 50/103, H01M 50/105, H01M 50/474, H01M 50/477, H01M 50/489

(54) **LITHIUM-IONEN-BATTERIEZELLE SOWIE HERSTELLUNGSVERFAHREN FÜR EINE SOLCHE**

(30) Priorität: 14.10.2020 DE 102020212975
(71) Anmelder: VOLKSWAGEN AG, 38440 Wolfsburg (DE)
(72) Erfinder: LANG, Michael, 31135 Hildesheim (DE); YZAGUIRRE SÁNCHEZ, Silvia-Luna, 10115 Berlin (DE)
(74) Vertreter: FDST Patentanwälte

(57) **Zusammenfassung**

Die Erfindung betrifft ein Verfahren zu Herstellung einer Lithium-Ionen-Batteriezelle (8), bei dem eine Elektrodenanordnung (24) aus Elektroden (26) sowie eine Hülle (18) für die Elektrodenanordnung (24) bereitgestellt werden, bei dem die Elektroden (26) der Elektrodenanordnung (24) anhand eines Bandes (30) fixiert werden, und bei dem ein Ausgleichselement (32) sowie die Elektrodenanordnung (24) in die Hülle (18) eingebracht werden, wobei das Band (30) in einer Aussparung (34) des Ausgleichselements (32) aufgenommen wird. Des Weiteren betrifft die Erfindung eine solche Lithium-Ionen-Batteriezelle (8) sowie ein elektrisch angetriebenes Kraftfahrzeug (2), dessen Traktionsbatterie (4) eine solche Lithium-Ionen-Batteriezelle (8) aufweist.

## Beschreibung

Die Erfindung betrifft ein Verfahren zur Herstellung einer Lithium-Ionen-Batteriezelle, insbesondere einer Pouchzelle. Des Weiteren betrifft die Erfindung eine solche Lithium-Ionen-Batteriezelle sowie ein elektrisch angetriebenes Kraftfahrzeug mit einer Traktionsbatterie, welche zumindest eine solche Lithium-Ionen-Batteriezelle aufweist.

Ein elektrisch angetriebenes Kraftfahrzeug weist typischerweise eine Traktionsbatterie (Hochvolt, HV-Batterie) auf, welche einen Elektromotor zum Antrieb des Kraftfahrzeugs mit Energie versorgt. Dabei ist unter einem elektrisch angetriebenen Kraftfahrzeug insbesondere ein Elektrofahrzeug, welches die zum Antrieb notwendige Energie lediglich in der Traktionsbatterie speichert (BEV, battery electric vehicle), ein Elektrofahrzeug mit einem Reichweitenverlängerer (REEV, range extended electric vehicle), ein Hybridfahrzeug (HEV, hybrid electric vehicle), ein Plug-In-Hybridfahrzeug (PHEV, plug-in hybrid electric vehicle) und/oder ein Brennstoffzellenfahrzeug (FCEV, fuel cell electric vehicle) zu verstehen, welches die mittels einer Brennstoffzelle erzeugte elektrische Energie in der Traktionsbatterie zwischenspeichert.

Eine solche Traktionsbatterie weist eine Anzahl an miteinander verschalteten Batteriemodulen auf, welche wiederum eine Anzahl an Lithium-Ionen-Batteriezellen (Li-Ionen-Batteriezellen) aufweisen. Diese werden im Folgen kurz auch als Batteriezellen bezeichnet. Dabei sind mehrere Varianten der Batteriezellen, nämlich zylindrische Zellen (Rundzellen), Pouchzellen und prismatische Zellen, bekannt, welche sich in der Anordnung deren Elektroden unterscheiden.

So sind bei der Pouchzelle deren Elektroden, also die Anoden und die Kathoden, der Elektrodenanordnung alternierend übereinander gestapelt, wobei zwischen den Elektroden jeweils ein Separator angeordnet ist. Diese Anordnung ist ebenso in einem prismatischen Gehäuse möglich, sodass diese Zelle im Folgenden prismatisch gestapelte Zelle genannt wird. Bei der zylindrischen Zelle sowie bei einem anderen Typ der prismatischen Zelle sind die Elektroden der Elektrodenanordnung unter Bildung eines sogenannten Wickels aufgewickelt (aufgerollt), wobei zwischen den Elektroden jeweils ein Separator eingewickelt ist. Dieser letztere Typ der prismatischen Zelle wird auch als prismatisch gewickelte Zelle bezeichnet.

Beispielsweise wird im Zuge der Herstellung der Batteriezelle ein Band zum Fixieren der Elektrodenanordnung verwendet: So wird anhand des Bandes eine unerwünschte relative Verschiebung oder Verstellung der Elektroden des Elektrodenstapels bzw. ein unerwünschtes Abwickeln (Abrollen) des Wickels vermieden.

Nachteilig führt das Band im Montagezustand zu einem größeren Druck auf diejenigen Stellen der Elektrodenanordnung, an denen das Band angeordnet ist, im Vergleich zu denjenigen Stellen der Elektrodenanordnung, an denen kein Band angeordnet ist.

Dieser Druck ist beispielsweise durch die Zellatmung begründet. Insbesondere bei der Pouchzelle, welche typischerweise kein steifes (biegefestes) Gehäuse aufweist, sondern dessen Hülle anhand einer Folie gebildet ist, wird ein Druck zusätzlich durch ein gegeneinander Verpressen mehrerer in einem Batteriemodul nebeneinander gestapelten Pouchzellen anhand von Druckplatten bewirkt. Insbesondere erhöht sich der Druck im Laufe der Nutzungsdauer der Batteriezelle durch sogenanntes "Swelling" zusätzlich.
Bei prismatischen und zylindrischen Zellen führen Zellatmung und "Swelling" dazu, dass sich der Druck gegen das Zellgehäuse aufbaut.

In den Bereichen der Elektrodenanordnung mit erhöhtem Druck, also im Bereich des Bandes ist das elektrochemische Verhalten verändert, insbesondere resultiert der erhöhte Druck zu einer vermehrten Abscheidung metallischen Lithiums, aufgrund dessen die Lithium-Ionen-Batteriezelle vergleichsweise schnell an Kapazität verliert.

Der Erfindung liegt die Aufgabe zugrunde, ein besonders geeignetes Herstellungsverfahren für eine Lithium-Ionen-Batteriezelle sowie eine solche Lithium-Ionen-Batteriezelle anzugeben. Insbesondere soll ein ungleichmäßiger Druck auf die Elektrodenanordnung vermieden sein. Des Weiteren soll ein elektrisch angetriebenes Kraftfahrzeug angegeben werden, welches eine Traktionsbatterie mit einer solchen Lithium-Ionen-Batteriezellen aufweist.

Bezüglich des Verfahrens wird die Aufgabe erfindungsgemäß gelöst durch die Merkmale des Anspruchs 1. Hinsichtlich der Lithium-Ionen-Batteriezelle wird die Aufgabe mit den Merkmalen des Anspruchs 3 und bezüglich des elektrisch angetriebenen Kraftfahrzeugs mit den Merkmalen des Anspruchs 10 erfindungsgemäß gelöst. Vorteilhafte Ausgestaltungen und Weiterbildungen sind Gegenstand der Unteransprüche. Dabei gelten die Ausführungen im Zusammenhang mit dem Verfahren sinngemäß auch für die Lithium-Ionen-Batteriezelle sowie für das elektrisch angetriebene Kraftfahrzeug und umgekehrt.

Das Verfahren ist zur Herstellung einer Lithium-Ionen-Batteriezelle, welche im Folgen kurz als Batteriezelle bezeichnet wird, vorgesehen und eingerichtet.

Verfahrensgemäß wird zunächst eine Elektrodenanordnung aus Elektroden, also aus Anoden und Kathoden bereitgestellt. Dabei sind die Elektroden zweckmäßigerweise blatt- oder bandförmig ausgebildet. Sie weisen also eine vergleichsweise geringe Dicke auf. Zudem ist zwischen den einzelnen Elektroden zweckmäßigerweise ein Separator angeordnet. Wie eingangs erwähnt ist geeigneter Weise bei einer Pouchzelle sowie bei einer prismatisch gestapelten Batteriezelle die Elektrodenanordnung als ein Elektrodenstapel und bei einer prismatisch gewickelten oder bei einer zylindrischen Zelle als (Elektroden-)Wickel ausgebildet.

Weiterhin wird eine Hülle für die Elektrodenanordnung bereitgestellt. Diese dient dazu, die Elektrodenanordnung im Montagezustand zu umschließen. Sofern die Batteriezelle als eine Pouchzelle ausgebildet ist, ist die Hülle mittels einer Unterschale und mittels eines Deckels gebildet. Die Unterschale und der Deckel sind anhand einer Folie, vorzugsweise auf Aluminiumbasis, gebildet. Dabei weist die Unterschale eine Wannenform auf und ist insbesondere durch Tiefziehen der Folie gebildet. Je nach Ausgestaltung der Pouchzelle ist der Deckel eben ausgebildet oder in analoger Weise zur Unterschale wannenförmig ausgebildet. Je nach Ausgestaltung der Pouchzelle besteht die Hülle zunächst entweder aus zwei zueinander separaten Teilen, nämlich dem Deckel und der Unterschale, wobei diese später passig aufeinander zum Liegen gebracht und anschließend versiegelt werden. Alternativ hierzu sind der beispielsweise als Oberschale ausgebildete Deckel und die Unterschale aus demselben Objekt, insbesondere aus einer einzigen Folie, gebildet und werden später durch Umklappen entlang einer Kante zwischen Unterschale und Deckel passig aufeinander zum Liegen gebracht und anschließend versiegelt. Sofern die Batteriezelle als prismatische oder als zylindrische Zelle ausgebildet ist, ist die Hülle mittels eines biegefesten Gehäuses, beispielsweise aus Metall, gebildet. Allenfalls bildet die Hülle im Montagezustand einen Aufnahmeraum für die Elektrodenanordnung.

Verfahrensgemäß werden die Elektroden der Elektrodenanordnung anhand eines Bandes (Fixierband, Fixiertape), insbesondere anhand eines Klebebandes, relativ zueinander fixiert. Bei einer Ausgestaltung der Batteriezelle als Pouchzelle oder als prismatisch gestapelte Batteriezelle ist das Band beispielsweise um den Elektrodenstapel herumgewickelt. Allenfalls ist eine unerwünschte Realtivverstellung der Elektroden zueinander vermieden. Bei einer Ausgestaltung der Batteriezelle als zylindrische oder als prismatisch gewickelte Zelle ist vorzugsweise das Freiende der aufgewickelten Elektroden anhand des (Klebe-)Bandes am Wickel fixiert, sodass ein unerwünschtes Abwickeln vermieden ist.

Darauf folgend wird verfahrensgemäß die Elektrodenanordnung sowie ein Ausgleichselement in die Hülle eingebracht. Das Ausgleichselement weist dabei zumindest eine Aussparung auf, welche der Aufnahme des Bandes dient. Zweckmäßigerweise korrespondiert die Aussparung hinsichtlich deren Form, insbesondere hinsichtlich dessen Kontur, und/oder hinsichtlich dessen Position mit der Form des Bands bzw. mit der Position des Bands. Folglich wird bei der Montage das Band in der Aussparung aufgenommen.

Für den Fall, dass mehr als ein Band zum Fixieren verwendet wird, weist das Ausgleichselement eine entsprechende Anzahl an Aussparungen auf.

Zweckmäßigerweise wird die Hülle mit der darin aufgenommenen Elektrodenanordnung und dem darin aufgenommenen Ausgleichselement anschließend fluiddicht verschlossen, geeigneter Weise mit Ausnahme einer Einfüllöffnung für einen Elektrolyten. Geeigneter Weise wird anschließend an das Einfüllen des Elektrolyten die Batteriezelle zunächst versiegelt, darauf folgen formiert. Zeitlich auf das Formieren folgend wird die Batteriezelle zum Entgasen erneute geöffnet und anschließend final vollständig fluiddicht versiegelt.

Anhand des Ausgleichselements ist eine vergleichsweise große Fläche, insbesondere mit einheitlicher Dicke gebildet. Folglich ist ein auf die Elektrodenanordnung wirkender Druck vergleichsweise homogen. Damit einhergehend ist die Abscheidung von metallischem Lithium und der entsprechende Kapazitätsverlust reduziert.

Gemäß einer vorteilhaften Ausgestaltung des Verfahrens wird das Ausgleichselement beim Einbringen in die Hülle auf diese, geeigneter Weise auf einer Innenseite der Hülle, aufgeklebt. Auf diese Weise ist das Ausgleichselement stoffschlüssig mit der Hülle gefügt und dort fixiert. Vorteilhaft ist auf diese Weise ein unerwünschtes Verrutschen des Ausgleichselements verhindert.

Eine (Lithium-lonen-)Batteriezelle, welche insbesondere gemäß dem Verfahren in einer der oben dargestellten Varianten hergestellt ist, weist die Elektrodenanordnung aus Elektroden auf, wobei die Elektroden anhand des Bandes fixiert sind. Die Elektrodenanordnung ist dabei wie oben dargestellt als Elektrodenstapel im Falle einer Pouchzelle oder einer prismatisch gestapelten Batteriezelle und als Wickel im Falle einer zylindrischen oder prismatisch gewickelten Zelle ausgebildet.

Weiterhin weist die Batteriezelle die Hülle auf, welche die Elektrodenanordnung inklusive des Bands umschließt. In der Hülle ist das Ausgleichselement aufgenommen und zwischen der Hülle und der Elektrodenanordnung angeordnet. Dabei weist das Ausgleichselement die Aussparung auf, in welcher das Band aufgenommen ist.

In geeigneter Ausgestaltung der Batteriezelle ist dabei das Ausgleichselement an der Hülle fixiert, insbesondere an diese geklebt.

Alternativ hierzu wird das Ausgleichselement an der Elektrodenanordnung fixiert, insbesondere auf diese aufgeklebt. Vorteilhaft ist auf diese Weise ein sogenanntes Einhausen, also ein Einbringen der Elektrodenanordnung in die Hülle, erleichtert, da das Ausgleichselement und das Band bereits an der Elektrodenanordnung zueinander ausgerichtet sind. Aufgrund dessen ist die Anforderung an eine exakte Positionierung der Hülle mit daran fixiertem Ausgleichselement relativ zum Elektrodenstapel vergleichsweise klein. Je nach Art der Fixierung, beispielsweise durch Kleben, des Ausgleichselements an der Elektrodenanordnung kann diese an der Hülle zuverlässiger sein als eine Fixierung an der Elektrodenanordnung. Beispielsweise haftet der verwendete Kleber besser an der Hülle.

Beispielsweise ist die Batteriezelle für eine Traktionsbatterie eines elektrisch angetriebenen Kraftfahrzeugs vorgesehen und eingerichtet.

Gemäß einer Vorteilhaften Weiterbildung der Batteriezelle ist das Ausgleichselement folienartig. Zum einen ist ein solches vergleichsweise dünnes Ausgleichselement platzsparend. Zum anderen ist das folienartige Ausgleichselement vorzugsweise flexibel, also biegbar, was eine Montage erleichtert und insbesondere eine Flexibilität einer Pouchzelle nicht oder lediglich in vergleichsweise geringem Maße beeinträchtigt.

Beispielsweise ist die Aussparung als eine Vertiefung in der der Elektrodenanordnung zugewandten Seite des Ausgleichselements ausgebildet, sodass das Band in der Aussparung aufgenommen ist. Gemäß einer geeigneten Ausgestaltung der Batteriezelle jedoch ist die Aussparung durchgehend. Mit anderen Worten erstreckt sich die Aussparung entlang der gesamten Ausdehnung des Ausgleichselements in dessen Dickenrichtung, also von der der Hülle zugewandten Seite zur der Elektrodenanordnung zugewandten Seite des Ausgleichselements. Mit anderen Worten ist die Aussparung durchgehend in der als Dickenrichtung bezeichneten Richtung, welche sich senkrecht zur der Hülle zugewandten (Klebe)-Fläche des Ausgleichselements erstreckt.

Gemäß einer vorteilhaften Ausgestaltung weist die Aussparung eine Tiefe, also eine Ausdehnung in Dickenrichtung des Ausgleichselements auf, welche der Dicke des Bands entspricht. Sofern die Aussparung durchgehend ist, weist das Ausgleichselement somit die gleiche Dicke auf wie das Band. Also ist die räumliche Ausdehnung des Ausgleichselements in dessen Dickenrichtung gleich der räumlichen Ausdehnung des in der Aussparung aufgenommenen Bands in dieser Richtung.

Allenfalls ist eine vergleichsweise gleichmäßige Druckeinwirkung auf den Elektrodenstapel realisiert. Auf diese Weise ist vorteilhaft ein ungleichmäßiger Druck auf die Elektrodenanordnung weiter reduziert oder sogar gleichmäßige Druckverteilung erreicht.

In vorteilhafter Ausgestaltung der Batteriezelle weist das Ausgleichselement und das Band im Wesentlichen das gleiche Kompressionsmodul auf. Infolge dessen wird bei Ausübung eines Drucks auf das Band und auf das Ausgleichselement eine im Wesentlichen gleiche Änderung der Dicke des Ausgleichselements und des Bands bewirkt. Folglich ist auch bei Einwirkung von Druck auf die, insbesondere als Pouchzelle ausgebildete, Batteriezelle eine vergleichsweise gleichmäßige (homogene) Druckverteilung auf den Elektrodenstapel realisiert.

Hierzu ist bevorzugt das Ausgleichselement aus dem gleichen Material wie das Band. Sofern das Ausgleichselement an die Hülle und das Band auf die Elektrodenanordnung geklebt ist, ist bevorzugt auch der hierzu verwendete Klebstoff identisch.

Gemäß einer vorteilhaften Ausgestaltung der als Pouchzelle oder als prismatisch gestapelt ausgebildeten Batteriezelle deckt das Ausgleichselement die Oberseite und/oder die Unterseite der als Elektrodenstapel ausgebildeten Elektrodenanordnung vollständig hinsichtlich der Stapelrichtung des Elektrodenstapels ab. Unter der Oberseite und unter der Unterseite sind dabei die zur Stapelrichtung (Stapelhochrichtung) des Elektrodenstapels senkrecht orientierten Seiten des Elektrodenstapels zu verstehen. Auf diese Weise ist vorteilhaft auf der ganzen Fläche der Ober-und/oder Unterseite eine gleichmäßige Druckverteilung erreicht.

Bei einer als prismatisch gewickelten Batteriezelle oder bei einer zylindrischen Zelle ist das Ausgleichselement zumindest im Bereich des Bandes angeordnet. Beispielsweise umfass das Ausgleichselement den Elektrodenwickel umfangsseitig, wobei das Band in der Aussparung aufgenommen ist.

Gemäß einer vorteilhaften Ausgestaltung weist ein elektrisch angetriebenes Kraftfahrzeug eine Traktionsbatterie auf, welche zumindest eine solche Lithium-Ionen-Batteriezelle umfasst.

Nachfolgend werden Ausführungsbeispiele der Erfindung anhand einer Zeichnung näher erläutert. Darin zeigen:
- Fig. 1: schematisch ein elektrisch angetriebenes Kraftfahrzeug, dessen Traktionsbatterie eine Anzahl an Batteriemodulen aufweist, wobei die Batteriemodule wiederum eine Anzahl an als Pouchzellen ausgebildeten Lithium-Ionen-Batteriezellen umfassen,
- Fig. 2a: schematisch in perspektivischer Ansicht eine Unterschale einer Hülle der Pouchzelle mit Blick auf eine Innenseite der Hülle, wobei ein Ausgleichselement auf eine Innenseite der Hülle aufgeklebt ist, und wobei das Ausgleichselement Aussparungen für Bänder zum Fixieren von Elektroden einer Elektrodenanordnung aufweist,
- Fig. 2b: schematisch in perspektivischer Explosionsdarstellung die Unterschale mit darin eingeklebten Ausgleichselement sowie eine als Elektrodenstapel ausgebildete Elektrodenanordnung, wobei die Elektroden des Elektrodenstapels anhand des Bandes fixiert sind, und
- Fig. 2c: schematisch in perspektivischer Explosionsdarstellung die Pouchzelle, wobei in einen als Oberschale ausgebildeten Deckel der Hülle ein zweites Ausgleichselement eingeklebt ist, wobei das zweite Ausgleichselement zwischen der Oberschale und dem Elektrodenstapel angeordnet ist.

Einander entsprechende Teile und Größen sind in allen Figuren stets mit gleichen Bezugszeichen versehen.

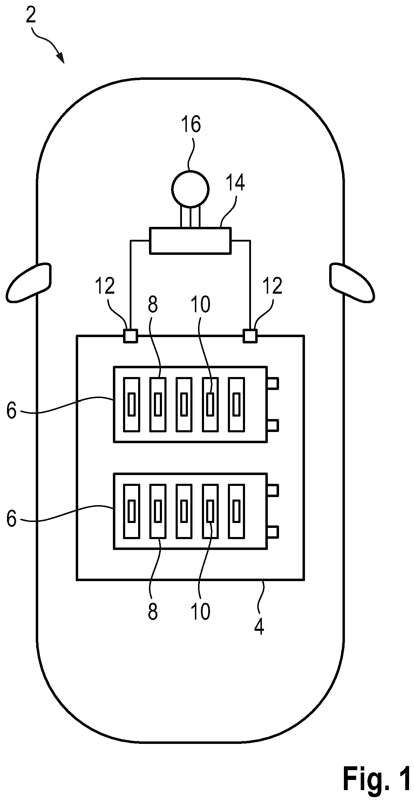

In Fig. 1 ist ein Kraftfahrzeug 2 mit einer Traktionsbatterie 4 dargestellt. Die Traktionsbatterie 4 weist eine Anzahl an auch als Zellmodule bezeichneten Batteriemodulen 6 auf, wobei zum Zweck einer besseren Übersichtlichkeit lediglich zwei der Batteriemodule 6 dargestellt sind.

Jedes der Batteriemodule 6 weist wiederum eine Anzahl an Lithium-Ionen-Batteriezellen 8 auf, von denen je Batteriemodul 6 jeweils fünf dargestellt sind. Die Lithium-Ionen-Batteriezellen 8, im Folgenden kurz als Batteriezellen 8 bezeichnet, stellen an deren Zell-Terminals 10 jeweils eine Spannung bereit. Die Batteriezellen 8 jedes Batteriemoduls 6 sind in nicht näher dargestellter Weise in Serie und/oder parallel zueinander verschaltet. Zudem sind die Batteriemodule 6 in nicht näher dargestellter Weise in Serie und/oder parallel zueinander verschaltet sowie mit Batterieanschlüssen 12 für einen Verbraucher elektrisch verbunden.

Gemäß dem Ausführungsbeispiel der Fig. 1 sind die Batteriezellen 8 als Pouchzellen ausgebildet. Bei jeder der Batteriezellen 8 ist das dargestellte Zell-Terminal 10 in Blickrichtung auf das dargestellte Kraftfahrzeug 2 vor dem Rest der Batteriezelle 8 angeordnet. Das zweite Zell-Terminal ist auf der gegenüberliegenden Seite, also in dieser Blickrichtung der Batteriezelle angeordnet, wobei in der dargestellten Ansicht das zweite Zell-Terminal durch die Batteriezelle verdeckt und entsprechend nicht dargestellt ist. Gemäß weiterer nicht dargestellter Alternativen können die Zell-Terminals 10 auch anders angeordnet sein, beispielsweise sind diese an der derselben Seite der Batteriezelle nebeneinander angeordnet.

Gemäß einer weiteren nicht dargestellten Alternativen sind die die Batteriezellen 8 als prismatische oder als zylindrische Batteriezellen ausgebildet.

An den Batterieanschlüssen 12 der Traktionsbatterie 4 ist ein Verbraucher angeschlossen, welcher hier als ein Wechselrichter 14 eines Antriebstrangs des Kraftfahrzeugs 2 und ein an diesen angeschlossener Elektromotor 16 ausgebildet ist. Der Wechselrichter 20 wandelt den von der Traktionsbatterie 4 bereitgestellten Gleichstrom bzw. die von dieser bereitgestellte Gleichspannung in einen zum Betrieb des Elektromotors 16 geeigneten Wechselstrom bzw. in eine Wechselspannung. Alternativ ist der Elektromotor 16 als, insbesondere permanenterregter, Gleichstrommotor ausgebildet und direkt oder gegebenenfalls über einen DC/DC-Wandler an die Batterieanschlüsse angeschlossen. Zusammenfassend stellt die Traktionsbatterie elektrische Energie für einen Antrieb des Kraftfahrzeugs 2 bereit.

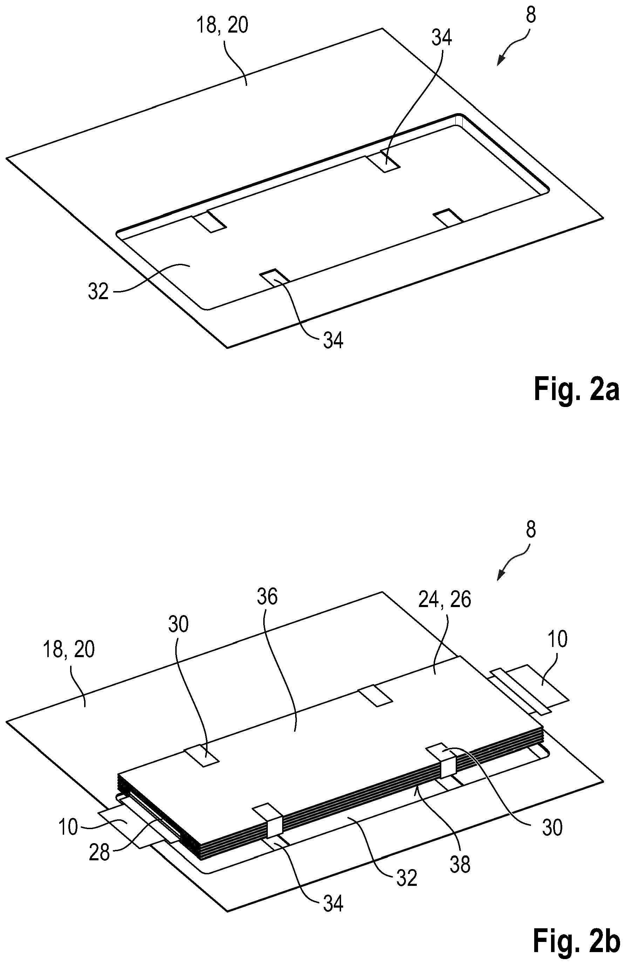

In den Figuren 2a bis 2c sind Teile einer der Batteriezellen 8 dargestellt. Gemäß der Ausführung der Figuren 1 bis 2c ist jede der Batteriezellen 8 dabei als eine Pouchzelle ausgebildet.

Die Batteriezelle 8 weist eine Hülle 18 mit einer wannenförmigen Unterschale 20 sowie mit einem wannenförmigen, als Oberschale ausgebildeten Deckel 22 auf. Die Unterschale 20 sowie der Deckel 22 sind dabei jeweils mittels einer tiefgezogenen Folie gebildet. Gemäß einer nicht weiter dargestellten Alternative sind der Deckel 22 und die Unterschale 20 zusammenhängend ausgebildet, also aus einer einzigen Folie gebildet. Die Hülle 18 bildet einen Aufnahmeraum für eine als Elektrodenstapel ausgebildete Elektrodenanordnung 24. Im Montagezustand umschließt die Hülle 18 die Elektrodenanordnung 24.

Wie insbesondere in der Fig. 2b erkennbar ist, weist die Elektrodenanordnung 24 blattförmige Elektroden 26, also Anoden und Kathoden auf, welche in einer Stapelrichtung Z übereinander gestapelt sind. In nicht näher dargestellter Weise sind dabei die Kathoden beidseitig bezüglich der Stapelrichtung Z mit einem Separator laminiert. Dabei sind die (Tabs) Ableiter 28 der Kathoden zusammengeführt und mit einem der Zell-Terminals gefügt. Zudem sind die (Tabs) Ableiter 28 der Anoden zusammengeführt und mit dem anderen der Zell-Terminals 10gefügt. Die Zell-Terminals 10 sind aus der Hülle 18 herausgeführt.

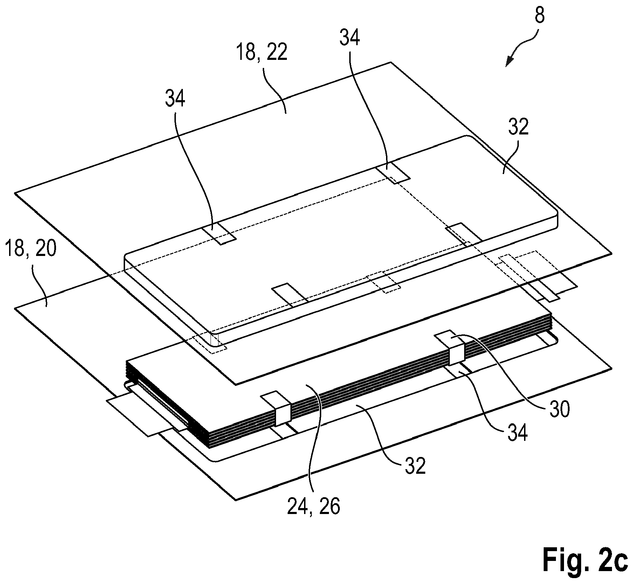

Die Elektroden 26 des Elektrodenstapels 24 sind anhand zumindest eines als Klebeband ausgebildeten Bands 30 zueinander fixiert. Gemäß der Ausgestaltung der Figuren 2b und 2c ist der Elektrodenstapel anhand vier Klebebändern 30 fixiert. Jeder dieser umgreift den Elektrodenstapel 24 seitlich. Also ist jedes der Bänder 30 sowohl hinsichtlich der in Stapelrichtung Z an der dem Deckel zugewandten Oberseite 36, an der Seite sowie an der der Unterschale zugewandten Unterseite 38, angeordnet, insbesondere angeklebt.

An der Innenseite der Unterschale 20, also an deren dem Elektrodenstapel 24 zugewandten Seite, sowie an der Innenseite des Deckels 22, also an dessen dem Elektrodenstapel 24 zugewandten Seite, ist jeweils ein folienartiges Ausgleichselement 32 aufgeklebt. Jedes der Ausgleichselemente weist in Stapelrichtung Z, welcher auch einer Dickenrichtung des jeweiligen Ausgleichselements 32 entspricht, durchgehende Aussparungen 34 für eines der Bänder 30 auf. Mit anderen Worten erstrecken sich die Aussparungen 34 jeweils durchgehend in Dickenrichtung des jeweiligen Ausgleichselements 32, also in (Stapelhochrichtung) Stapelrichtung Z, von der der Hülle 18 zugewandten Seite zur dem Elektrodenstapel 24 zugewandten Seite des jeweiligen Ausgleichselements 32.

Zusammenfassend sind im Montagezustand innerhalb der Hülle 18 die Ausgleichselemente 32 zwischen der Unterschale 20 und dem Elektrodenstapel 24 bzw. zwischen dem Deckel 22 und dem Elektrodenstapel 24 angeordnet.

Dabei weisen die Ausgleichselemente 32 die gleiche Dicke auf wie die Bänder 30. Mit anderen Worten ist eine räumliche Ausdehnung jedes der Ausgleichselemente gleich einer Banddicke.

Somit weist jede der Aussparungen 34 eine Tiefe auf, welche der Dicke des jeweiligen Bands 30 entspricht. Dabei ist jedes der Ausgleichselemente 32 aus dem gleichen Material gebildet wie die Bänder 30, so dass diese den gleichen Kompressionsmodul aufweisen.

Die Ausgleichselemente 32 decken dabei die Oberseite 36 bzw. die dieser gegenüberliegende Unterseite 38 des Elektrodenstapels 24 in Stapelrichtung Z vollständig ab.

Die Aussparungen 34 korrespondieren hinsichtlich deren Form (Kontur) und hinsichtlich deren Position mit der Form bzw. mit der Position der Bänder 30, so dass die Bänder 30 im Montagezustand der Batteriezelle 8 in der entsprechenden Aussparung 34 aufgenommen ist. Die Ausgleichselemente 32 bilden also eine Art Negativform für die Bänder.

Im Montagezustand weist der Elektrodenstapel 24 inklusive der Bänder 30 zusammen mit den Ausgleichselementen 32 eine einheitliche Höhe in Stapelrichtung Z an der gesamten Oberseite 36 und an der gesamten Unterseite 38 des Elektrodenstapels 24 auf. Folglich ist auch bei einer Druckeinwirkung in Stapelrichtung auf die Batteriezelle 8 eine vergleichsweise homogene Druckverteilung realisiert und eine mit eine ungleichmäßiger Druckverteilung auf die Elektrodenanordnung 24 einhergehenden vermehrten Abscheidung metallischen Lithiums besonders vorteilhaft vermieden.

Zusammenfassend werden im Zuge der Herstellung der Batteriezelle 8 die Ausgleichselemente 32 sowie der Elektrodenstapel in die Hülle eingebracht, wobei die Ausgleichselemente 32 auf die Unterschale 20 der Hülle 18 bzw. auf den Deckel 22 der Hülle 18 aufgeklebt wird.

In der Fig. 2c ist zum Zwecke einer besseren Erkennbarkeit der Deckel 22 sowie das auf dessen Innenseite aufgeklebte Ausgleichselement 32 transparent dargestellt.

Die Erfindung ist nicht auf das vorstehend beschriebene Ausführungsbeispiel beschränkt. Vielmehr können auch andere Varianten der Erfindung vom Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: elektrisch angetriebenes Kraftfahrzeug
- 4: Traktionsbatterie
- 6: Batteriemodul
- 8: Lithium-Ionen-Batteriezelle
- 10: Zell-Terminal
- 12: Batterieanschluss
- 14: Wechselrichter
- 16: Elektromotor
- 18: Hülle
- 20: Unterschale
- 22: Deckel
- 24: Elektrodenanordnung/Elektrodenstapel
- 26: Elektrode
- 28: Ableiter
- 30: (Fixier-)Band
- 32: Ausgleichselement
- 34: Aussparung
- 36: Oberseite
- 38: Unterseite

- Z: Stapelrichtung

## Patentansprüche

1. Verfahren zu Herstellung einer Lithium-Ionen-Batteriezelle (8), insbesondere einer Pochzelle,
- bei dem eine Elektrodenanordnung (24) aus Elektroden (26) sowie eine Hülle (18) für die Elektrodenanordnung (24) bereitgestellt werden,
- bei dem die Elektroden (26) der Elektrodenanordnung (24) anhand eines Bandes (30) fixiert werden, und
- bei dem ein Ausgleichselement (32) sowie die Elektrodenanordnung (24) in die Hülle (18) eingebracht werden,
- wobei das Band (30) in einer Aussparung (34) des Ausgleichselements (32) aufgenommen wird.

2. Verfahren nach Anspruch 1,
**dadurch gekennzeichnet,**
**dass** das Ausgleichselement (32) auf die Hülle (18) oder auf die Elektrodenanordnung (24) aufgeklebt wird.

3. Lithium-Ionen-Batteriezelle (8), insbesondere hergestellt nach dem Verfahren gemäß Anspruch 1 oder 2, aufweisend
- eine Elektrodenanordnung (24) aus Elektroden (26), wobei die Elektroden (26) anhand eines Bandes (30) fixiert sind,
- eine die Elektrodenanordnung (24) umschließende Hülle (18), und
- ein in der Hülle (18) aufgenommenes und zwischen dieser und der Elektrodenanordnung (24) angeordnetes Ausgleichselement (32), wobei das Ausgleichselement (32) eine Aussparung (34) aufweist, in welcher das Band (30) aufgenommen ist.

4. Lithium-Ionen-Batteriezelle (8) nach Anspruch 3,
**dadurch gekennzeichnet,**
**dass** das Ausgleichselement (32) folienartig ist.

5. Lithium-Ionen-Batteriezelle (8) nach Anspruch 3 oder 4,
**dadurch gekennzeichnet,**
**dass** die Aussparung (34) durchgehend von der der Hülle (18) zugewandten Seite zur der Elektrodenanordnung (24) zugewandten Seite des Ausgleichselements (32) ist.

6. Lithium-Ionen-Batteriezelle (8) nach einem der Ansprüche 3 bis 5,
**dadurch gekennzeichnet,**
**dass** die Aussparung (34) eine Tiefe aufweist, welche der Dicke des Bands (30) entspricht.

7. Lithium-Ionen-Batteriezelle (8) nach einem der Ansprüche 3 bis 6,
**dadurch gekennzeichnet,**
**dass** das Ausgleichselement (32) und das Band (30) im Wesentlichen das gleiche Kompressionsmodul aufweisen.

8. Lithium-Ionen-Batteriezelle (8) nach einem der Ansprüche 3 bis 7,
**dadurch gekennzeichnet,**
**dass** das Ausgleichselement (32) an der Hülle (18) fixiert, insbesondere angeklebt, ist.

9. Lithium-Ionen-Batteriezelle (8) nach einem der Ansprüche 3 bis 8,
**dadurch gekennzeichnet,**
- **dass** diese als Pouchzelle oder als prismatisch gestapelte Zelle ausgebildet ist, wobei die Elektrodenanordnung (24) als Elektrodenstapel ausgebildet ist, und wobei das Ausgleichselement (32) die Oberseite und/oder die Unterseite des Elektrodenstapels) vollständig abdeckt, oder
- **dass** diese als zylindrische oder als prismatisch gewickelte Batteriezelle ausgebildet ist, wobei die Elektrodenanordnung (24) als Wickel ausgebildet ist, und wobei das Ausgleichselement (32) zumindest im Bereich des Bandes (30) angeordnet ist, insbesondere den Wickel umfangsseitig umfasst.

10. Elektrisch angetriebenes Kraftfahrzeug (2) mit einer Traktionsbatterie (4), welche zumindest eine Lithium-Ionen-Batteriezelle (8) nach einem der Ansprüche 3 bis 9 aufweist.
